# EUROPÄISCHE PATENTSCHRIFT

(11) **EP 1 821 010 B1**
(45) Veröffentlichungstag und Bekanntmachung des Hinweises auf die Patenterteilung: **30.08.2017**
(21) Anmeldenummer: 07002240.5
(22) Anmeldetag: 02.02.2007
(51) Int. Cl.: B67C 7/00, F16J 15/40, F16J 15/42

(54) **Dichtungsanordnung zum Abdichten eines Übergangs zwischen einem umlaufenden und einem ortsfesten Maschinenelement sowie Anlage zum Behandeln von Flaschen oder dergleichen Behältern mit wenigstens einer solchen Dichtungsanordnung**
Sealing assembly for sealing the transition from a rotating and a stationary machine element and installation for handling bottles or similar containers with at least one such sealing assembly
Agencement de joint destiné à étanchéifier un passage entre un élément mécanique mobile et un élément mécanique fixe tout comme installation de traitement de bouteilles ou récipients analogues dotés d'au moins un tel agencement de joint

(30) Priorität: 17.02.2006 DE 102006007366
(43) Veröffentlichungstag der Anmeldung: 22.08.2007
(73) Patentinhaber: KHS GmbH, 44143 Dortmund (DE)
(72) Erfinder: Till, Volker, 65719 Hofheim/Taunus (DE); Sangi, Daryoush, 20251 Hamburg (DE)

(56) Entgegenhaltungen:
- WO-A-2004/065283
- FR-A- 2 102 557
- JP-A- H07 285 596
- US-A- 4 330 370

## Beschreibung

Die Erfindung bezieht sich auf eine Dichtungsanordnung gemäß Oberbegriff Patentanspruch 1 sowie auf eine Anlage zum Behandeln von Flaschen oder dergleichen Behälter gemäß Oberbegriff Patentanspruch 12.

Anlagen zum kaltaseptischen Abfüllen eines flüssigen Füllgutes in Flaschen oder dergleichen Behälter, beispielsweise zum kaltaseptischen Abfüllen von hitzeempfindlichen Getränken (z.B. Fruchtsäften) sind in unterschiedlichsten Ausführungen bekannt. Die einzelnen, eine solche Anlage bildenden und in der Fertigungs- oder Behandlungslinie aneinander anschließenden Maschinen, wie z.B. Rinser, Sterilisator, Füllmaschine, Verschließer, sind mit Einhausungen versehen, und zwar derart, dass sich innerhalb der Anlage eine Förderstrecke für die Behälter oder Flaschen in einem sterilen Raum ergibt, der durch diese Einhausung gegenüber angrenzenden nicht sterilen Räumen oder Bereichen, beispielsweise der Umgebung insbesondere auch gegen ein Eindringen von Keimen abgedichtet ist.

U.a. bei Verwendung von Maschinen umlaufender Bauart, wie sie für Rinser, Sterilisatoren, Füllmaschinen und/oder Schließmaschinen üblich ist, weist eine solche Einhausung in der Regel mehrere Übergänge zwischen einem rotierenden oder umlaufenden

Teil der Einhausung und einem ortsfesten Teil dieser Einhausung auf, sodass an diesen Bereichen speziellen Dichtungen erforderlich sind.

Bekannt ist es (WO2004/065283, FR2 102 557) derartige Dichtungen als Siphon-Dichtungen auszubilden. Jede Siphon-Dichtung besteht dabei im Wesentlichen aus wenigstens einem die Dreh- oder Umlaufachse des umlaufenden Teils der Einhausung kreisringförmig umschließenden rinnenartigen Kanal oder Ringkanal, in den ein kreisringförmiger Wandabschnitt an einem am anderen Teil der Einhausung vorgesehenen Element der Siphon-Dichtung hineinreicht. Zumindest während des Füllbetriebes ist der Ringkanal mit einer Sperrflüssigkeit soweit gefüllt, dass auch der wenigstens eine ringförmige Wandabschnitt der Siphon-Dichtung in die Sperrflüssigkeit ausreichend tief eintaucht, sodass der zwischen den beiden Elementen der jeweiligen Siphon-Dichtung verbleibende Spalte durch die Sperrflüssigkeit dicht verschlossen ist. Die Sperrflüssigkeit enthält bevorzugt ein sterilisierendes Medium und besteht beispielsweise aus destilliertem, sterilem Wasser mit einem Anteil an Wasserstoffperoxyd H202. In der Regel ist das den wenigstens einen Ringkanal bildende Element der Siphon-Dichtung an dem nicht umlaufenden Teil und das den in den Ringkanal hineinreichenden ringförmigen Wandabschnitt aufweisende Element der Siphon-Dichtung an dem umlaufenden Teil der Einhausung an dem betreffenden Übergang vorgesehen.

Um die angestrebte Dichtungs- und Sperrwirkung zu erreichen, ist es erforderlich, dass der Spiegel der Sperrflüssigkeit in dem jeweiligen Ringkanal ein vorgegebenes Niveau nicht unterschreitet. Bei der bekannten Maschine ist hierfür jeder Siphon-Dichtung ein eigenständiger Pufferbehälter für die Sperrflüssigkeit zugeordnet, der über eine Leitung mit dem Ringkanal der Siphon-Dichtung nach Art von kommunizierenden Röhren verbunden ist. Durch einen elektronischen Regelkreis mit einem Füllstandssensor im Pufferbehälter und einem Steuerventil in einer Versorgungsleitung wird der dortige Flüssigkeitsspiegel der Sperrflüssigkeit auf einem vorgegebenen Niveau gehalten, sodass auch der Flüssigkeitsspiegel der Sperrflüssigkeit in dem Ringkanal der zugehörigen Siphon-Dichtung das vorgegebene Niveau aufweist.

Konstruktionsbedingt sind an einer Anlage zum kaltaseptischen Abfüllen derartige Siphon-Dichtungen auf unterschiedlichem Niveau notwendig, sodass bei der bekannten Anlage zumindest für jedes Niveau ein eigenständiger Pufferbehälter mit Regelkreis und den zugehörigen Komponenten (Sensoren, Steuerventilen usw.) notwendig ist, was einen erheblichen konstruktiven Aufwand bedeutet.

Bekannt ist speziell auch eine Dichtungsanordnung zum Abdichten des Übergangs zwischen einem umlaufenden und einem ortsfesten Maschinenelement einer Anlage zum Behandeln von Flaschen oder dgl. Behältern mit den Merkmalen des Oberbegriffs des Patentanspruchs 1 (JP07 285 596). Bei dieser bekannten Anlage, die beispielsweise zum sterilen Füllen von Behältern innerhalb einer von einem ortsfesten Maschinenelement und einem umlaufenden Maschinenelement gebildeten Einhausung dient und bei der der Übergang zwischen den Maschinenelementen ebenfalls durch eine Siphon-Dichtung abgedichtet ist, sind gegenüber dieser Dichtung radial nach außen versetzt Düsen vorgesehen, über die während eines Wasch- oder Reinigungsprozesses ein flüssiges Wasch- und Reinigungsmedium auf die Elemente der Siphon-Dichtung ausgebracht werden kann.

Das optimale Reinigen und/oder Sterilisieren einer Vielzahl von Siphon-Dichtungen ist bei den bekannten Dichtungsanordnungen und Anlagen umständlich und zeitraubend. Aufgabe der Erfindung ist es, eine Dichtungsanordnung aufzuzeigen, die derartige Nachteile vermeidet. Zur Lösung dieser Aufgabe ist eine Dichtungsanordnung entsprechend dem Patentanspruch 1 ausgebildet. Eine Anlage oder Vorrichtung zum Behandeln von Flaschen oder dergleichen Behälter mit wenigstens einer, bevorzugt aber mit mehreren derartigen Dichtungsanordnungen ist Gegenstand des Patentanspruches 11. Bei der Erfindung ist die wenigstens eine Siphon-Dichtung mit wenigstens einer Austrittsöffnung oder -düse für ein Reinigungs- oder Sterilisationsmedium versehen, sodass diese Dichtung bzw. deren Ringkanal dann in einer CIP-Reinigung (cleaning in place bzw. ortsgebundene Reinigung) oder SIP-Sterilisation (sterilisation in place bzw. ortsgebundene Sterilisation) vereinfacht, zeitsparend und gründlich gereinigt und/oder sterilisiert werden kann, was insbesondere bei einer Anlage mit einer Vielzahl von Siphon-Dichtungen von großem Vorteil ist. In einem einzigen Prozess erfolgt die Reinigung und Sterilisation der Siphon-Dichtungen einer Anlage mit einer Vielzahl solcher Dichtungen.

Die erfindungsgemäße Dichtungsanordnung ist bei Anlagen zum Behandeln von Flaschen oder dergleichen Behältern überall dort besonders vorteilhaft verwendbar, wo eine Abdichtung zwischen einem umlaufenden Teil oder Element und einem ortsfesten Teil oder Element der betreffenden Anlage erforderlich ist, insbesondere aber am Übergang zwischen einem umlaufenden und einem ortsfesten Teil einer Maschine oder Anlage zum kaltaseptischen Abfüllen eines flüssigen Füllgutes in Flaschen oder dergleichen Behälter.

Bei der Erfindung ist am Übergang zwischen dem umlaufenden oder rotierenden Teil der Einhausung und dem ortsfesten Teil der Einhausung vorzugsweise zusätzlich zu der wenigstens einen Siphon-Dichtung wenigstens eine mechanische Dichtung vorgesehen, die dann aus einem sich entlang der Siphon-Dichtung erstreckenden Dichtungselement an einem der Einhausung besteht, welches mit einer Dichtungsfläche am anderen Teil der Einhausung zusammenwirkt. Bevorzugt ist diese mechanische Dichtung an der dem nicht sterilen Bereich zugewandten Seite der Siphon-Dichtung vorgesehen, sodass die Siphon-Dichtung durch die mechanische Dichtung gegenüber dem nicht sterilen Bereich abgeschirmt ist. Hierdurch ergeben sich mehrere weitere Vorteile. So ist z.B. bei der CIP-Reinigung und/oder SIP-Sterilisation ein Austreten des verwendeten Mediums nach Außen verhindert. Durch die mechanische Dichtung ist weiterhin der direkte Kontakt der Sperrflüssigkeit mit dem nicht sterilen Bereich bzw. mit der dortigen Luft vermieden, wodurch insbesondere die Verkeimung und/oder Verschmutzung der Sperrflüssigkeit reduziert wird. Weiterhin wird auch ein Auftreten von Sperrflüssigkeit und/oder des in dieser Flüssigkeit vorhandenen Sterilisationsmediums in den nicht sterilen Bereich verhindert und damit insbesondere auch Beeinträchtigungen, beispielsweise Geruchsbelästigungen für Personen, beispielsweise Bedienungspersonal, welche sich in dem nicht sterilen Bereich aufhalten.

Bei einer Anlage zum kaltaseptischen Abfüllen sind in der Regel mehrere Dichtungsanordnungen mit mechanischer Dichtung und Siphon-Dichtung, auf unterschiedlichem Niveau jeweils an den Übergängen zwischen einem umlaufenden oder rotierenden Teil der Einhausung und einem ortsfesten Teil der Einhausung vorgesehen. Sämtliche Siphon-Dichtungen bzw. deren Ringkanäle werden dann aus einem gemeinsamen Vorrats- oder Versorgungsbehälter oder Reservoir ständig mit Sperrflüssigkeit versorgt, und zwar beispielsweise über eine gemeinsame Pumpe und über den einzelnen Siphon-Dichtungen individuell zugeordneten Mittel zum Einstellen oder Regeln des Volumenstroms der der jeweiligen Siphon-Dichtung zufließenden Sperrflüssigkeit. Da der wenigstens eine Auslass des jeweiligen Ringkanals als Überlauf ausgeführt ist, stellt sich ohne die Notwendigkeit eines elektronischen Regelkreises in jedem Ringkanal selbstständig das notwendige Niveau des Flüssigkeitsspiegels der Sperrflüssigkeit ein.
Durch die in der Zuführung bzw. in den Versorgungsleitungen der Siphon-Dichtungen individuell vorgesehenen Mittel zur Einstellung oder Regelung des Volumenstromes werden hydrostatische Unterschiede, die sich durch das unterschiedliche Höhenniveau der verschiedenen Siphon-Dichtungen ergeben, ausgeglichen. Bevorzugt sind diese Mittel zum Einstellen und Regeln des Volumenstroms von Einstellventilen gebildet, die beispielsweise bei Inbetriebnahme der Anlage einmal eingestellt werden. Durch die Einstellung des Volumenstromes der Sperrflüssigkeit kann auch unterschiedlichen Verschmutzungsbedingungen an den einzelnen Siphon-Dichtungen Rechnung getragen werden, d.h. der Volumenstrom an solche Siphon-Dichtungen, an denen die Sperrflüssigkeit durch die Ausbildung und/oder Anordnung der betreffenden Dichtung und/oder durch äußerer Einflüsse einer höheren Verschmutzung oder Verkeimung unterliegt, wird höher eingestellt als an solche Siphon-Dichtungen, an denen der Grad der Verschmutzung geringer ist.

Um eventuell auftretende Fehler im Versorgungssystem zur Versorgung der Siphon-Dichtungen mit der Dichtungs- oder Sperrflüssigkeit sofort zu erkennen und im Falle eines Fehlers entsprechende Maßnahmen, beispielsweise die Absetzung einer Fehlermeldung und/oder die Unterbrechung des Füllprozesses zu veranlassen, ist in dem Sperrflüssigkeitsrücklauf jeder Siphon-Dichtung ein Durchflussmesser angeordnet, der entweder den Volumenstrom der zurückfließenden Sperrflüssigkeit tatsächlich ermittelt und mit dem Volumenstrom der der betreffenden Siphon-Dichtung zugeflossenen Sperrflüssigkeit vergleicht, sodass bei einem eine zulässige Toleranzgrenze übersteigenden Unterschied die Fehlermeldung und/oder die Produktionsunterbrechung veranlasst werden oder aber die Fehlermeldung und/oder die sofortige Produktionsunterbrechung werden dann veranlasst, wenn von dem betreffenden Durchflussmesser keine rückfließende Sperrflüssigkeit festgestellt wird oder aber der von dem Durchflussmesser ermittelte Volumenstrom unter einem vorgegebenen Schwellwert liegt.

Eine Niveauregelung des Flüssigkeitsspiegels der Sperrflüssigkeit in den Siphon-Dichtungen ist bei der erfindungsgemäßen weder vorgesehen noch erforderlich. Hierdurch ergibt sich eine wesentliche Vereinfachung der Konstruktion und darüber hinaus eine wesentlich verbesserte Betriebssicherheit, da das Niveau des Flüssigkeitsspiegels regelnde elektronische Regelkreise vermieden sind. Weiterbildungen der Erfindung sind Gegenstand der Unteransprüche. Die Erfindung wird im Folgenden anhand der Figuren an einem Ausführungsbeispiel näher erläutert. Es zeigen:
Fig. 1 in sehr vereinfachter Blockdarstellung mehrere zu einer Anlage zusammengestellte Einzelmaschinen für eine kaltsterile oder kaltaseptische Abfüllung eines Füllgutes in Flaschen;
Fig. 2 in Teildarstellung einen der Behandlungs- bzw. Sterilisationsköpfe einer Vorrichtung oder Einzelmaschine (Sterilisator) zum Sterilisieren der Flaschen, zusammen mit einer einen sterilen Raum von einem nicht sterilen Raum, z.B. der Umgebung trennenden Siphon- Dichtung an einem Einhausungsübergang;
Fig. 3 ein Versorgungssystem zur Versorgung mehrerer Siphon-Dichtungen mit der erforderlichen Dicht- oder Sperrflüssigkeit 6
Fig. 4 eine Darstellung wie Figur 2, jedoch erfindungsgemäss für eine CIP-Reinigung und/oder SIP-Sterilisation der Siphon-Dichtung;

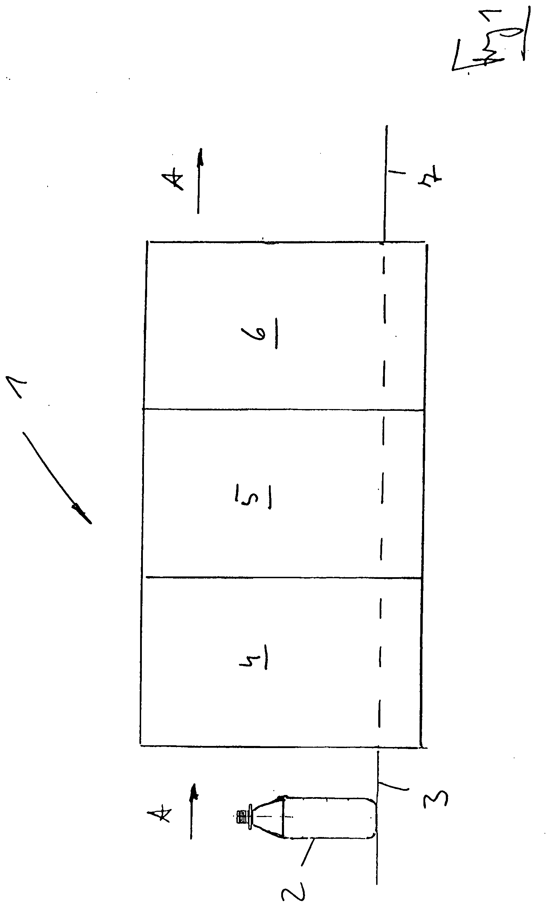

Die in der Figur 1 allgemein mit 1 bezeichnete Gesamtanlage dient zum kaltaseptischen Abfüllung eines flüssigen Füllgutes in Flaschen 2, die in der Anlage 1 über einen Transporteur 3 (Pfeil A) zugeführt und z.B. in der Anlage zunächst gereinigt und in einem Sterilisator 4 mit einem geeigneten Behandlungsmedium, u.a. mit einem erhitzten oder verdampften Aerosol bestehend aus Luft und Wasserperoxyd (H202) behandelt, anschließend in einer Füllmaschine 5 mit dem Füllgut gefüllt und schließlich in einem Verschließer 6 verschlossen werden, sodass die gefüllten und verschlossenen Flaschen 2 dann über den Transporteur 7 einer weiteren Station, z.B. eine Etikettiermaschine zugeführt werden können.

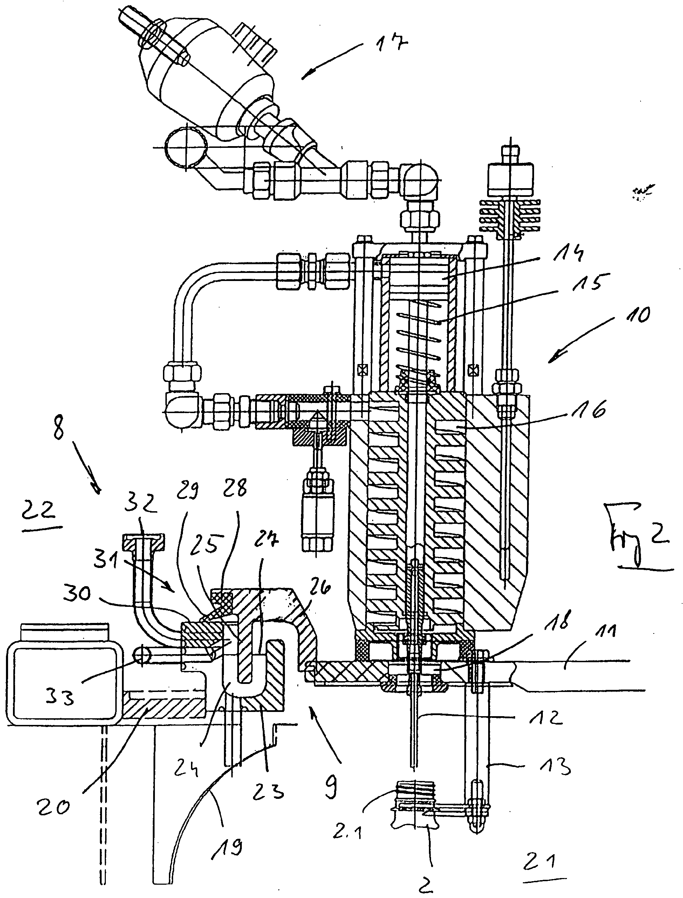

Innerhalb der Anlage 1 bewegen sich die Flaschen in einem keimfreien, nach Außen steril abgedichteten Raum, der durch eine entsprechende Einhausung gebildet ist. Da aber der Sterilisator 4 ebenso wie andere Einzelmaschinen, z.B. die Füllmaschine 5 und die Verschließmaschine 6 sowie eventuell ein nicht dargestellter Rinser als Maschinen umlaufender Bauart ausgebildet sind, ergeben sich im Bereich der Einhausung bzw. an der Trennung zwischen dem sterilen Raum und dem nicht sterilen Raum auch Einhausungsübergange zwischen jeweils einem rotierenden oder umlaufenden Element und einem ortsfesten, d.h. nicht umlaufenden Element. Ein derartiger Übergang ist in der Figur 2 beispielhaft dargestellt und mit dem Pfeil 8 bezeichnet. Um solche Übergänge abzudichten, sind dort Siphon-Dichtungen vorgesehen. Eine derartige Dichtung ist in der Figur 2 beispielhaft dargestellt und allgemein mit 9 bezeichnet.

Im Detail zeigt die Figur 2 einen Behandlungskopf 10 des Sterilisators 4. Dieser Behandlungskopf ist an der Oberseite eines um eine vertikale Maschinenachse umlaufend angetriebenen scheibenartigen Rotors 11 vorgesehen und weist im Wesentlichen die dem Fachmann bekannte Ausbildung auf, und zwar u.a. mit einem Düsenrohr 12, welches über die Unterseite des Rotors 11 vorsteht und der zum Sterilisieren der jeweiligen Flasche 2 in diese durch ihre Flaschenmündung 2.1 einführbar ist. Die Flaschen 2 sind jeweils an einem Flaschenträger 13 gehalten, der im Bereich jedes Behandlungskopfes 10 am Rotor 11 vorgesehen ist. Das Absenken und Anheben des Düsenrohres erfolgt pneumatisch durch eine im Gehäuse des Behandlungskopfes 10 vorgesehene Betätigungseinrichtung (Kolben 14 und Rückstellfeder 15). Im Behandlungskopf 10 ist weiterhin ein schraubenförmiger Kanal 16 ausgebildet, der während der Sterilisationsphase von dem in einer Düsenanordnung 17 bereitgestellten Behandlungs- oder Sterilisationsmedium durchströmt wird. Der Behandlungskopf 10 ist weiterhin an der Oberseite des scheibenförmigen Rotors 11 abgedichtet so befestigt, dass lediglich das Düsenrohr 12 durch eine abgedichtete Öffnung 18 im Rotor 11 über die Unterseite dieses Rotors vorsteht.

Der Rotor 11 sowie auch eine mit dem Rotor nicht umlaufende, d.h. feststehende Wandung 19 an ein Maschinengestell 20 sind Teile der Einhausung, die einen sterilen Raum 21, der unterhalb des Rotors 11 und innerhalb der Wandung 19 gebildet ist und in welchem sich die Flaschen 2 bewegen, von einem äußeren, nicht sterilen Raum 22 trennt. An dem Übergang 8 zwischen dem Rotor 11 und dem ortsfesten Wandelement 19 befindet sich, wie bereits ausgeführt eine Siphon-Dichtung 9. Diese besteht bei der dargestellten Ausführungsform im Wesentlichen aus einem mit dem Rotor 11 nicht umlaufenden, am Maschinengestell 20 vorgesehenen, die vertikale Achse des Rotors 11 konzentrisch umschließenden Ring 23, der einen an der Oberseite offenen Ringkanal 24 bildet. In diesen Ringkanal 24 reicht von oben her ein kreisringförmiger, die Achse des Rotors 11 konzentrisch umschließender Wandabschnitt 25 hinein, der Bestandteil eines am Umfang des kreisscheibenförmigen Rotors 11 befestigten Ringkörpers 26 ist.

Zum sterilen Abdichten des Raumes 21 gegenüber der Umgebung 22 ist der Ringkanal 24 bis zu einem Niveau 27 mit einer Sperrflüssigkeit gefüllt, sodass der Wandabschnitt 25 mit einem größeren Teil seiner axialen Länge in diese Flüssigkeit eingetaucht ist und sich hierdurch die Siphon-Dichtung 9 ergibt.

Die Sperrflüssigkeit besteht beispielsweise aus sterilem bzw. destilliertem Wasser und besitzt, um den hygienischen Anforderungen des Füllprozesses Rechnung zu tragen, sterilisierende, reinigende und keimtötende Eigenschaften, was insbesondere durch Einhaltung einer Mindestkonzentration an einem keimtötenden und sterilisierenden Zusatz, beispielsweise an H202 erreicht wird. Die H202-Konzentration beträgt beispielsweise 35 %.

Am Ringkörper 26 ist bezogen auf die Achse des Rotors 11 radial außen liegend ein Dichtungsring 28 mit Dichtungslippe 29 aus einem geeigneten gummielastischen Material oder elastomeren Kunststoff vorgesehen. Die Dichtungslippe 29 des, die Achse des Rotors 11 konzentrisch umschließenden Dichtungsrings 28 liegt auf einer ringförmigen, die Achse des Rotors 11 ebenfalls konzentrisch umschließenden Abdichtfläche 30 auf, die an der dem Rotor 11 abgewandten, radial außen liegenden Seite des Ringes 23 vorgesehen ist. Die mit der Abdichtfläche 30 zusammenwirkende Dichtung 28 bildet eine zusätzliche mechanische Dichtung 31. Wesentlich hierbei ist, dass diese Dichtung 31 zwischen der Siphon-Dichtung 9 und dem nicht sterilen Bereich 22, z.B. der Umgebung vorgesehen ist, d.h. die mechanische Dichtung 31 die Siphon-Dichtung 9 gegenüber die Umgebung 22 abschirmt.

Durch die mechanische Dichtung 31 wird u.a. verhindert, dass Sperr- oder Sperrflüssigkeit oder das in dieser Flüssigkeit vorhandene Sterilisationsmedium in die Umgebung gelangt und dadurch sich in dieser Umgebung aufhaltende Personen, insbesondere auch Bedienungspersonal, zumindest durch den Geruch der Sperrflüssigkeit beeinträchtigt und/oder durch diese Sperrflüssigkeit verschmutzt und/oder gefährdet werden.

Durch die mechanische Dichtung 31 ist die Sperrflüssigkeit gegen Verschmutzung und/oder Verkeimung von der Umgebung 22 her wirksam geschützt, sodass die angestrebte Sperrwirkung mit hoher Sicherheit erreicht wird.

Wesentlich für die Erzielung der gewünschten Sperrwirkung ist u.a., dass der Ringkanal 24 mit der Sperrflüssigkeit ausreichend, d.h. bis zu dem Niveau 27 gefüllt ist und somit der Abschnitt 25 ausreichend tief in die Sperrflüssigkeit hineinreicht. Dies wird dadurch sichergestellt, dass während des Füllbetriebes über einen oder mehrere Einlässe 32 Sperrflüssigkeit dem Ringkanal 24 ständig zugeführt wird und diese Flüssigkeit über einen oder mehrere Auslässe 33 ständig aus dem Ringkanal 24 abgeführt wird. Die Auslässe 33 sind als Überläufe ausgeführt, sodass sich hierdurch selbsttätig, d.h. ohne eine Regelung das Niveau 27 des Flüssigkeitsspiegels der Sperrflüssigkeit im Ringkanal 24 einstellt.

Im Bereich der Anlage 1 sind mehrere Übergänge 8 zwischen einem umlaufenden Teil und einem ortsfesten Teil der Einhausung vorgesehen, und zwar beispielsweise im Bereich der Füllmaschine 5 und im Bereich des Verschließers 6. An allen diesen Übergängen 8 sind der Siphon-Dichtung 9 entsprechende Siphon-Dichtungen vorgesehen, und zwar bevorzugt wiederum mit jeweils einer zusätzlichen mechanischen Dichtung 31 an der außen liegenden, d.h. der Umgebung zugewandten Seite der jeweiligen Siphon-Dichtung 9.

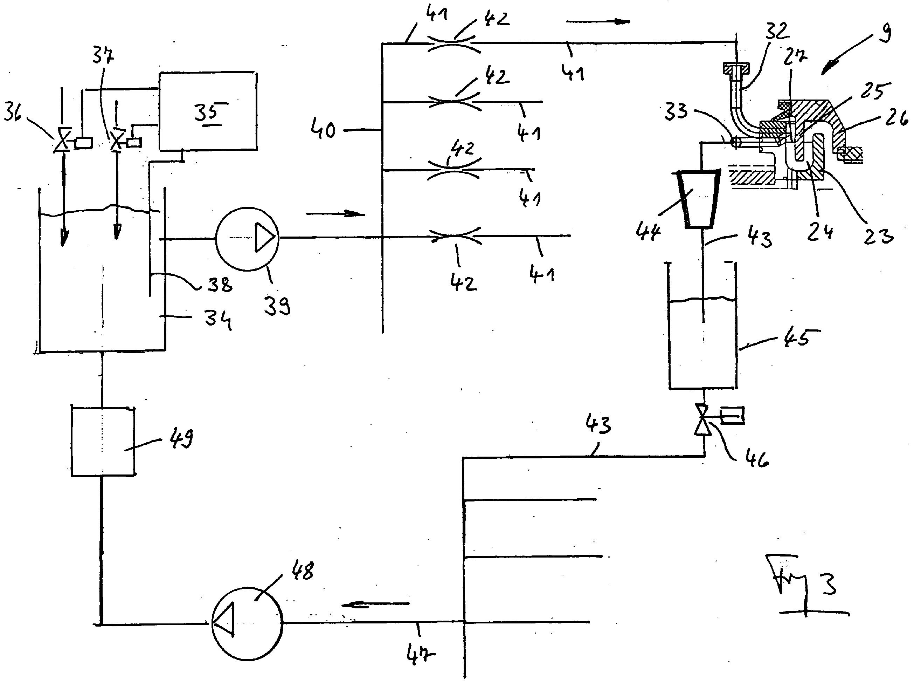

Zur Versorgung sämtlicher Siphon-Dichtungen 9, die u.a. maschinenbedingt auf unterschiedlichem Niveau angeordnet sind, dient das in der Figur 3 wiedergegebene Versorgungssystem. Dieses umfasst u.a. einen Aufbereitungs- und Vorratstank 34 für die frische Sperrflüssigkeit. Diesem Tank werden über von einem Prozessor 35 gesteuerte Steuerventile 36 und 37 H202 sowie destilliertes und steriles Wasser zugeführt, und zwar in Abhängigkeit von der erforderlichen und von einem Sensor 38 überwachten H202-Konzentration (z.B. 35%) der Sperrflüssigkeit.

Der Versorgungstank 34 ist an verschiedene Ring- oder Versorgungsleitungen 41 angeschlossen, die jeweils über ein Regelventil 42 zur Einstellung des Volumenstroms bzw. der Durchflussmenge mit den Einlässen 32 des Ringkanals 24 einer Siphon-Dichtung 9 verbunden sind. Das jeweilige Regelventil 42 wird dabei beispielsweise bei Inbetriebnahme oder bei einem Probelauf derart eingestellt, dass trotz des unterschiedlichen Höhenniveaus der einzelnen Siphon-Dichtungen 9 dem Ringkanal 24 jeder Siphon-Dichtung 9 ausreichend Sperrflüssigkeit zufließt, und zwar nicht nur zur Einhaltung des erforderlichen Niveaus 27 des Flüssigkeitsspiegels der Sperrflüssigkeit in dem jeweiligen Ringkanal 24, sondern auch zur Erzielung eines ausreichenden Austauschs der Sperrflüssigkeit in dem jeweiligen Ringkanal 24, u.a. auch in Abhängigkeit von dem zu erwartenden Verschmutzungsgrad. Mit dem jeweiligen Regelventil 42 wird somit bevorzugt ein konstanter Volumenstrom für die der jeweiligen Siphon-Dichtung 9 zufließende Sperrflüssigkeit eingestellt.

Die Auslässe 33 jedes Ringkanals 24 sind mit einer gemeinsamen Leitung 43 verbunden, in welcher ein Durchflussmesser 44 vorgesehen ist und die zu einem Puffertank 45 führt. Über ein am Auslass des Puffertanks 45 vorgesehenes Steuerventil 46 wird der Puffertank 45 niveaugesteuert entleert, und zwar in eine für sämtliche Siphon-Dichtungen 9 gemeinsame Ring- oder Sammelleitung 47, über die die Sperrflüssigkeit mittels einer in dieser Sammelleitung vorgesehene, zusätzlichen Pumpe 48 an den Tank 34 zurückgeführt wird. In der Sammelleitung 47 ist eine Sensor- oder Analyseein-heit 49 vorgesehen, mit der der H202-Gehalt der rückgeführten Sperrflüssigkeit analysiert wird, sodass dann in Abhängigkeit von den von dieser Sensoreinheit 49 gelieferten Messdaten über den Prozessor 35 die Zugabe an H202 gesteuert werden kann, und zwar zur Aufrechterhaltung der erforderlichen H202-Konzentration.

Durch das in der Figur 3 dargestellte Versorgungssystem ist u.a. sichergestellt, dass sämtliche Siphon-Dichtungen 9 auch auf unterschiedlichem Höhenniveau ausreichend mit Sperrflüssigkeit versorgt sind und die Sperrflüssigkeit in jeder Siphon-Dichtung 9 auch die erforderliche H202-Konzentration aufweist. Einen wesentlichen Sicherheitsfaktor bildet hierbei der in der Rückleitung 43 jeder Siphon-Dichtung 9 individuell vorgesehene Durchflussmesser 44. Der Durchflussmesser 44 überwacht, dass eine ausreichende Menge an Sperrflüssigkeit über die als Überläufe ausgebildeten Auslässe 33 zurückfließt. Dann, wenn die den Durchflussmesser 44 durchströmende Menge an Sperrflüssigkeit einen vorgegebenen unteren Schwellwert unterschreitet, wird aufgrund der Messdaten des Durchflussmessers 44 eine Störung der Anlage 1 optisch und/oder akustisch angezeigt und/oder der Betrieb der Anlage 1 gestoppt.

Hierfür wird mit dem Durchflussmesser 44 beispielsweise der Volumenstrom der von der Siphon-Dichtung zurückfließenden Sperrflüssigkeit ermittelt und dann mit dem festen Wert des Volumenstroms der der jeweiligen Siphon-Dichtung 9 zufließenden Sperrflüssigkeit verglichen. Bei einer über einen vorgegebenen Toleranzwert hinausgehenden Differenz wird eine Fehlermeldung abgesetzt, die zu dem optischen und/oder akustischen Fehlersignal führt und/oder eine sofortige Produktionsunterbrechung veranlasst. Grundsätzlich besteht z.B. auch die Möglichkeit, den Durchflussmesser 44 so auszubilden, dass eine Fehlermeldung dann veranlasst wird, wenn der Volumenstrom der von der jeweiligen Siphon-Dichtung 9 zurückfließenden Sperrflüssigkeit einen vorgegebenen Schwellwert unterschreitet.

Vorstehend wurde davon ausgegangen, dass die rückgeführte Sperrflüssigkeit nach dem Passieren der Sensoreinheit 49 wieder in den Tank 34 gelangt. Grundsätzlich besteht auch die Möglichkeit eine weitere Aufbereitung der Sperrflüssigkeit vorzusehen, bevor diese dann in den Tank 34 zurückgeführt wird.

Die beschriebene Ausbildung der Siphon-Dichtungen 9 gestattet es auch, beim Reinigen der Anlage 1 sämtliche Siphon-Dichtungen 9 im Rahmen einer CIP-Reinigung (cleaning in place) zu reinigen sowie im Rahmen einer SIP-Sterilisation (sterilisation in place) zusätzlich zu sterilisieren. Gerade im Bereich der kaltaseptischen Abfüllung ist es von besonderer Bedeutung, sämtliche innen liegenden, d.h. im sterilen Raum 21 befindlichen Bereiche einer Anlage 1 regelmäßig zu reinigen und zu desinfizieren bzw. sterilisieren.

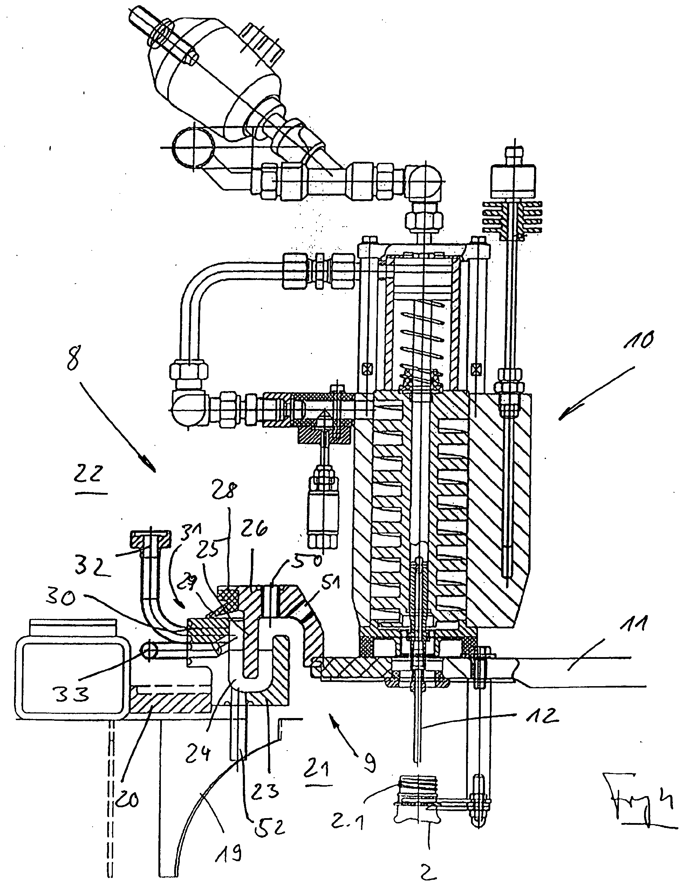

Für die CIP-Reinigung bzw. SIP-Sterilisation sind entsprechend der Figur 4 an der jeweiligen Siphon-Dichtung 9 zusätzlich zu den Einlässen 32 und Auslässen 33 Düsen bzw. Düsenöffnungen 50 und 51 vorgesehen, die eine Sprüh- und Desinfektionsvorrichtung bilden und über die die jeweilige Siphon-Dichtung 9 und dabei insbesondere auch deren Ring 23 einschließlich des Ringkanals 24 mit einer Reinigungsflüssigkeit gereinigt bzw. ausgespült und anschließend mit einem flüssigen Desinfektions- oder Sterilisationsmedium, beispielsweise mit einer höher konzentrierten Wasserstoffperoxydlösung behandelt werden können. Die Düsenöffnungen 50 und 51 sind hierfür an ein entsprechendes System zum Zuführen des Reinigungs- und/oder Sterilisationsmedium angeschlossen. Das in den Ringkanal 24 gelangende Behandlungsmedium fließt über die Auslässe 33 ab. Zusätzlich, während des normalen Füllbetriebes verschlossene Auslässe 52 dienen zum vollständigen Entleeren des jeweiligen Ringkanals 24.

Bei der dargestellten Ausführungsform sind die Düsen bzw. Düsenöffnungen 50 und 51 an dem rotierenden Teil, d.h. an dem mit dem Rotor umlaufenden Ringkörper 26 vorgesehen, sodass mit einer relativ geringen Menge an Reinigungs- und Desinfektionsmedium eine Reinigung der gesamten Siphon-Dichtung 9 und insbesondere des Ringes 23 mit dem Ringkanal 24 möglich ist.

### Bezugszeichenliste

- 1: Anlage zur aseptischen Kaltabfüllung
- 2: Flasche
- 3: Transporteur
- 4: Sterilisator
- 5: Füllmaschine
- 6: Verschließer
- 7: Transporteur
- 8: Übergang zwischen einem umlaufenden und einem ortsfesten Teil der Einhausung
- 9: Siphon-Dichtung
- 10: Behandlungskopf
- 11: Rotor
- 12: Düsenrohr
- 13: Flaschen- oder Behälterträger
- 14: Kolben
- 15: Rückstellfeder
- 16: Kanal
- 17: Düsenanordnung
- 18: Öffnung
- 19: Wandelement
- 20: Maschinenrahmen
- 21: steriler Raum
- 22: nicht steriler Raum bzw. Umgebung
- 23: Ring
- 24: Ringkanal
- 25: Ringabschnitt
- 26: Ringkörper
- 27: Niveau der Dichtungs- oder Sperrflüssigkeit
- 28: Dichtungsring
- 29: Dichtungslippe
- 30: Abdichtfläche
- 31: mechanische Dichtung
- 32: Einlass
- 33: Auslass
- 34: Tank
- 35: Prozessor
- 36, 37: Steuerventil
- 38: Sensor
- 39: Pumpe
- 40: Verteiler
- 41: Versorgungsleitung
- 42: Stromregelventil
- 43: Rückleitung
- 44: Durchflussmesser
- 45: Puffertank
- 46: Steuerventil
- 47: Sammelleitung
- 48: Pumpe
- 49: Sensoreinheit
- 50, 51: Austrittsöffnung oder Düse für Reinigungs- oder Sterilisierungsmedium
- 52: Auslass
- A: Transportrichtung

## Patentansprüche

1. Dichtungsanordnung zum Abdichten eines Übergangs (8) zwischen einem umlaufenden und einem ortsfesten Maschinenelement (11; 19, 20) einer Anlage (1) zur Behandlung von Flaschen (2) oder dergleichen Behältern, insbesondere zum Abdichten des Übergangs (8) zwischen dem umlaufenden und dem ortsfesten Teil einer einen sterilen Raum oder Bereich (21) von einem nicht sterilen Raum oder Bereich (22) trennenden Einhausung einer Anlage (1) zum kaltaseptischen Abfüllen, wobei die Dichtungsanordnung das umlaufende und das ortsfeste Maschinenelement (11; 19, 20) sowie wenigstens eine eine Relativbewegung zwischen den Maschinenelementen (11, 19) ermöglichenden Siphon-Dichtung (9) umfasst, die wenigstens einen eine Achse des umlaufenden Maschinenelementes (11) konzentrisch umschließenden Ringkanal (24) mit einer Dichtungs- oder Sperrflüssigkeit an dem ortsfesten Maschinenelement (19, 20) sowie wenigstens einen in den Ringkanal (24) und in die dortige Dichtungs- oder Sperrflüssigkeit hineinreichenden ringförmigen Wandabschnitt (25) an dem anderen, umlaufenden Maschinenelement (11) aufweist, mit wenigstens einer zum Ringkanal (24) offenen Düsenöffnung oder Düse (50, 51) zum Einbringen eines Reinigungs- und/oder Sterilisationsmedium für ein Reinigen und/oder Sterilisieren der wenigstens einen Siphon-Dichtung (9) in einem CIP-Reinigung-und/oder SIP-Sterilisationsprozesses, **dadurch gekennzeichnet, dass** die wenigstens eine Düsenöffnung oder Düse (50, 51) an einem an dem umlaufenden Maschinenelement (11) befestigten, den Wandabschnitt(25) umfassenden Ringkörper (26) der Siphon-Dichtung (9) vorgesehen ist.

2. Dichtungsanordnung nach Anspruch 1, **dadurch gekennzeichnet, dass** an wenigstens einer Seite der wenigstens einen Siphon-Dichtung (9) eine den Übergang (8) überbrückende mechanische Dichtung (31) mit wenigstens einem Dichtungselement (28) am umlaufenden und/oder am ortsfesten Maschinenelement (11; 19, 20) sowie mit wenigstens einer mit dem Dichtungselement (28) zusammenwirkenden Abdichtfläche (30) am ortsfesten und/oder am umlaufenden Maschinenelement (19, 20;11) vorgesehen ist.

3. Dichtungsanordnung nach Anspruch 2, **dadurch gekennzeichnet, dass** die mechanische Dichtung (31) an der dem nicht sterilen Raum oder Bereich (22) zugewandten Seite der wenigstens einen Siphon-Dichtung (9) vorgesehen ist.

4. Dichtungsanordnung nach Anspruch 2, **dadurch gekennzeichnet, dass** die wenigstens eine mechanische Dichtung (31) an der dem sterilen Raum oder Bereich (21) zugewandten Seite der wenigstens einen Siphon-Dichtung (9) vorgesehen ist.

5. Dichtungsanordnung nach einem der Ansprüche 2 bis 4, **dadurch gekennzeichnet, dass** die wenigstens eine mechanische Dichtung (31) die wenigstens eine Siphon-Dichtung (9) ringförmig umschließt.

6. Dichtungsanordnung nach einem der Ansprüche 2 bis 4, **dadurch gekennzeichnet, dass** die wenigstens eine mechanische Dichtung (31) von der wenigstens einen Siphon-Dichtung (9) ringförmig umschlossen ist.

7. Dichtungsanordnung nach einem der Ansprüche 2 bis 6, **dadurch gekennzeichnet, dass** das wenigstens eine Dichtungselement ein Dichtungsring (28) ist.

8. Dichtungsanordnung nach einem der Ansprüche 2 bis 7, **dadurch gekennzeichnet, dass** das wenigstens eine Dichtungselement zumindest eine mit der Abdichtfläche (30) zusammenwirkende Dichtungslippe (29) aufweist.

9. Dichtungsanordnung nach einem der vorhergehenden Ansprüche, **dadurch gekennzeichnet, dass** der wenigstens eine Ringkanal (24) zumindest einen Einlass (32) sowie wenigstens einen Auslass (33) für die Sperrflüssigkeit aufweist.

10. Dichtungsanordnung nach Anspruch 9, **dadurch gekennzeichnet, dass** der wenigstens eine Auslass (33) als ein das Niveau des Flüssigkeitsspiegels (27) der Sperrflüssigkeit einstellender Überlauf ausgeführt ist.

11. Anlage oder Vorrichtung zum Behandeln von Flaschen oder dergleichen Behältern (2), mit wenigstens einem Übergang (8) zwischen einem umlaufenden Maschinenelement (11) und einem ortsfesten Maschinenelement (19, 20) sowie mit einer an dem Übergang (8) vorgesehenen und die Relativbewegung zwischen den Maschinenelementen ermöglichenden Dichtungsanordnung, **dadurch gekennzeichnet, dass** die Dichtungsanordnung nach einem der vorhergehenden Ansprüche ausgebildet ist.

12. Anlage nach Anspruch 11, **dadurch gekennzeichnet, dass** die Anlage zum kaltaseptischen Abfüllen eines flüssigen Füllgutes in Flaschen oder dergleichen Behälter (2) ausgebildet ist, und dass die den Übergang (8) bildenden Maschinenelemente Teile (11, 19) einer einen sterilen Raum oder Bereich (21) von wenigstens einem nicht sterilen Raum oder Bereich trennenden Einhausung sind.

13. Anlage nach Anspruch 11 oder 12, **dadurch gekennzeichnet, dass** wenigstens ein Einlass (32) des wenigestens einen Ringkanals (24) der Siphon-Dichtung (9) mit einem Reservoir (34) verbunden ist, aus welchem dem Ringkanal (24) ständig Sperrflüssigkeit zugeführt werden kann.

14. Anlage nach einem der Ansprüche 11 - 13, **gekennzeichnet durch** einen Durchflussmesser (44) an dem wenigstens einen als Überlauf ausgebildeten Auslass (33) des jeweiligen Ringkanals (24), wobei der Durchflussmesser (44) zur Überwachung des von dem Ringkanal (24) abfließenden Volumenstroms der Sperrflüssigkeit von dieser durchströmt wird.

15. Anlage nach Anspruch 14, **dadurch gekennzeichnet, dass** der Durchflussmesser (44) zur Erzeugung eines Messsignals dient, welches eine Fehlermeldung und/oder eine sofortige Produktionsunterbrechung dann bewirkt, wenn der von dem wenigstens einen Ringkanal (24) zurückfließende Volumenstrom nicht dem Volumenstrom der dem wenigstens einen Ringkanal (24) zufließenden Sperrflüssigkeit entspricht und/oder der zurückfließende Volumenstrom einen vorgegebenen Schwellwert unterschreitet.

16. Anlage nach einem der Ansprüche 13 und 14-15, wenn abhängig vom Anspruch 13, **dadurch gekennzeichnet, dass** in einer mit dem wenigstens einen Einlass (32) der wenigstens einen Siphon-Dichtung (9) verbundenen Versorgungsleitung (41) mittel zur Einstellung oder Regelung des der wenigstens einen Siphon-Dichtung (9) zufließenden Volumenstroms der Sperrflüssigkeit vorgesehen ist.

17. Anlage nach einem der vorhergehenden Ansprüche 11 bis 16, **gekennzeichnet durch** wenigstens eine Sensoreinheit (40) zur ständigen Analyse einer rückgeführten Sperrflüssigkeit, insbesondere zur Bestimmung der Konzentration eines sterilisierenden Mediums in der Sperrflüssigkeit, über die (Sensoreinheit) die rückgeführte Sperrflüssigkeit an das Reservoir (4) oder an eine Einrichtung zur Aufbereitung der Sperrflüssigkeit gelangt.

18. Anlage nach einem der vorhergehenden Ansprüche 11 bis 17, **gekennzeichnet durch** mehrere, an jeweils einem Übergang zwischen dem umlaufenden und dem ortsfesten Maschinenelement (11,19) vorgesehenen Dichtungsanordnungen mit jeweils wenigstens einer Siphon-Dichtung (9), wobei sämtliche Siphon-Dichtungen (9) aus einem gemeinsamen Reservoir (34) mit der Sperrflüssigkeit versorgt werden.

19. Anlage nach Anspruch 18, **dadurch gekennzeichnet, dass** in einer Versorgungsleitung (41) jeder Siphon-Dichtung (9) die Mittel zur Einstellung und/oder Regelung des Volumenstromes der zufließenden Sperrflüssigkeit eigenständig vorgesehen sind.

20. Anlage nach Anspruch 18 oder 19, **dadurch gekennzeichnet, dass** sämtlichen Siphon-Dichtungen (9) oder Gruppen solcher Dichtungen eine gemeinsame Pumpe (39) zugeordnet ist.

21. Anlage nach einem der der Ansprüche 14 und 15-20, wenn abhängig vom Anspruch 14, **dadurch gekennzeichnet, dass** an dem wenigstens einen Auslass (33) oder an dem an diesen Auslass (33) angeschlossenen Rücklauf (43) jeder Siphon-Dichtung ein eigener Durchflussmesser (44) vorgesehen ist.

22. Anlage nach einem der Ansprüche 13 und 14-21, wenn abhängig vom Anspruch 13, **dadurch gekennzeichnet, dass** das Reservoir (34) zum Versorgen der Siphon-Dichtungen (9) mit Sperrflüssigkeit zugleich das Reservoir zum Sammeln der rückgeführten Sperrflüssigkeit ist.

23. Anlage nach einem der Ansprüche 13 und 14-22, wenn abhängig vom Anspruch 13, **dadurch gekennzeichnet, dass** am Reservoir (34) für die Sperrflüssigkeit Mittel (35, 36, 37, 38) zum Einstellen und Regeln einer vorgegebenen Konzentration an Sterilisationsmedium oder zum Ergänzen des Sterilisationsmediums vorgesehen sind.

## Claims

1. Sealing assembly for sealing a transition (8) between a rotating and stationary machine element (11; 19, 20) of a system (1) for the handling of bottles (2) or similar containers, in particular for sealing the transition (8) between the rotating and the stationary parts of a housing of a system (1), separating a sterile space or region (21) from a non-sterile space or region (22), for cold aseptic filling, wherein the sealing assembly comprises the rotating and the stationary machine elements (11; 19, 20) as well as at least one siphon seal (9) allowing for a relative movement between the machine elements (11; 19, 20), which comprises at least one ring channel (24) concentrically surrounding an axis of the rotating machine element (11), with a sealing or blocking fluid, at the stationary machine element (19, 20), as well as at least one ring-shaped wall element (25), extending into the ring channel (24) and into the sealing or blocking fluid present there, on the other rotating machine element (11), with at least one nozzle opening or nozzle (50, 51), open to the ring channel (24), for the introduction of a cleaning and/or sterilisation medium for a cleaning and/or sterilising of the at least one siphon seal (9) in a CIP cleaning process and/or SIP sterilisation process, **characterised in that** the at least one nozzle opening or nozzle (50, 51) is provided at a ring body (26) of the siphon seal (9), secured to the rotating machine element (11) and comprising the wall section (25).

2. Sealing assembly according to claim 1, **characterised in that**, on at least one side of the at least one siphon seal (9), a mechanical seal (31) is provided, bridging the transition (8), with at least one sealing element (28) on the rotating machine element and/or on the stationary machine element (11; 19, 20), as well as with at least one sealing surface (30), interacting with the sealing element (28), on the stationary and/or on the rotating machine element (19, 20; 11).

3. Sealing assembly according to claim 2, **characterised in that** the mechanical seal (31) is provided on the side of the at least one siphon seal (9) facing towards the non-sterile space or region (22).

4. Sealing assembly according to claim 2, **characterised in that** the at least one mechanical seal (31) is provided on the side of the at least one siphon seal (9) facing towards the sterile space or region (21).

5. Sealing assembly according to any one of claims 2 to 4, **characterised in that** the at least one mechanical seal (31) surrounds the at least one siphon seal (9) in the form of a ring.

6. Sealing assembly according to any one of claims 2 to 4, **characterised in that** the at least one mechanical seal (31) is enclosed by the at least one siphon seal (9) in the form of a ring.

7. Sealing assembly according to any one of claims 2 to 6, **characterised in that** the at least one sealing element is a sealing ring (28).

8. Sealing assembly according to any one of claims 2 to 7, **characterised in that** the at least one sealing element comprises at least one sealing lip (29) interacting with the sealing surface (30).

9. Sealing assembly according to any one of the preceding claims, **characterised in that** the at least one ring channel (24) comprises at least one inlet (32) as well as at least one outlet (33) for the sealing fluid.

10. Sealing assembly according to claim 9, **characterised in that** the at least one outlet (33) is configured as an overflow adjusting the level of the fluid surface (27) of the sealing fluid.

11. Plant or device for treating bottles or similar containers (2), with at least one transition (8) between a rotating machine element (11) and a stationary machine element (19, 20) as well as with a sealing assembly, provided at the transition (8) and allowing for the relative movement between the machine elements, **characterised in that** the sealing assembly is configured in accordance with any one of the preceding claims.

12. Plant according to claim 11, **characterised in that** the plant is configured for the cold aseptic filling of a liquid filling product into bottles or similar containers (2), and that the machine elements forming the transition (8) are parts (11, 19) of a housing separating a sterile space or region (21) from at least one non-sterile space or region.

13. Plant according to claim 11 or 12, **characterised in that** at least one inlet (32) of the at least one ring channel (24) of the siphon seal (9) is connected to a reservoir (34), from which sealing fluid can constantly be delivered to the ring channel (24).

14. Plant according to any one of claims 11-13, **characterised by** a flow meter (44) at the at least one outlet (33) of the respective ring channel (24), configured as an overflow, wherein, in order to monitor the volume flow of the sealing fluid flowing out of the ring channel (24), this flow flows through the flow meter (44).

15. Plant according to claim 14, **characterised in that** the flow meter (44) serves to produce a measurement signal, which then causes a fault message and/or an immediate production interruption if the volume flow flowing back from the at least one ring channel (24) does not correspond to the volume flow of the sealing fluid flowing to the at least one ring channel (24) and/or the volume flow flowing back falls below a predetermined threshold value.

16. Plant according to any one of claims 13 and 14-15 if dependent on claim 13, **characterised in that**, in a supply line (41) connected to the at least one inlet (32) of the at least one siphon seal (9), means are provided for adjusting or regulating the volume flow of the sealing fluid flowing to the at least one siphon seal (9).

17. Plant according to any one of claims 11 to 16, **characterised by** at least one sensor unit (40) for the constant analysis of a returned sealing fluid, in particular to determine the concentration of a sterilising medium in the sealing fluid, via which (the sensor unit) the returned sealing fluid passes to the reservoir (4) or to a device for providing the sealing fluid.

18. Plant according to any one of claims 11 to 17, **characterised by** a plurality of sealing assemblies provided in each case at a transition between the rotating and stationary machine elements (11, 19), with in each case at least one siphon seal (9), wherein all the siphon seals (9) are supplied with the sealing fluid from a common reservoir (34).

19. Plant according to claim 18, **characterised in that**, in the supply line (41) of each siphon seal (9), the means are provided for adjusting and/or regulating the volume flow of the inflowing sealing fluid.

20. Plant according to claims 18 or 19, **characterised in that** a common pump (39) is allocated to all the siphon seals (9) or groups of such seals.

21. Plant according to any one of claims 14 and 15 to 20, if dependent on claim 14, **characterised in that** an individual flow meter (44) is provided at the at least one outlet (33) or at the return line (43) connected to this outlet (33) of each siphon seal.

22. Plant according to any one of claims 13 and 14 to 21, if dependent on claim 13, **characterised in that** the reservoir (34) for supplying the siphon seals (9) with sealing fluid is at the same time the reservoir for collecting the returned sealing fluid.

23. Plant according to any one of claims 13 and 14 to 22, if dependent on claim 13, **characterised in that**, at the reservoir (34) for the sealing fluid, means (35, 36, 37, 38) are provided for adjusting and regulating a predetermined concentration of sterilisation medium or for supplementing the sterilisation medium.

## Revendications

1. Ensemble d'étanchéité servant à étanchéifier un passage (8) entre un élément de machine se déplaçant en périphérie et un élément de machine (11 ; 19, 20) stationnaire d'une installation (1) servant à traiter des bouteilles (2) ou des contenants similaires, en particulier servant à étanchéifier le passage (8) entre la partie se déplaçant en périphérie et la partie stationnaire d'une enceinte, séparant un espace ou une zone (21) stérile d'un espace ou d'une zone (22) non stérile, d'une installation (1) servant au transvasement aseptique à froid, dans lequel l'ensemble d'étanchéité comprend l'élément de machine se déplaçant en périphérie et l'élément de machine (11 ; 19, 20) stationnaire ainsi qu'au moins un joint d'étanchéité de siphon (9) permettant un déplacement relatif entre les éléments de machine (11, 19), lequel joint d'étanchéité de siphon présente au moins un canal annulaire (24) entourant de manière concentrique un axe de l'élément de machine (11) se déplaçant en périphérie, pourvu d'un liquide d'étanchéité ou de barrage au niveau de l'élément de machine (19, 20) stationnaire ainsi qu'au moins une section de paroi (25) de forme annulaire parvenant dans le canal annulaire (24) et dans le liquide d'étanchéité ou de barrage situé à cet endroit au niveau de l'autre élément de machine (11) se déplaçant en périphérie, comprenant au moins une ouverture de buse ou une buse (50, 51) ouverte en direction du canal annulaire (24) servant à introduire un milieu de nettoyage et/ou de stérilisation pour un nettoyage et/ou une stérilisation de l'au moins un joint d'étanchéité de siphon (9) lors d'un processus de nettoyage CIP et/ou de stérilisation SIP, **caractérisé en ce**
**que** l'au moins une ouverture de buse ou buse (50, 51) est prévue au niveau d'un corps annulaire (26) fixé au niveau de l'élément de machine (11) se déplaçant en périphérie, comprenant la section de paroi (25), du joint d'étanchéité de siphon (9).

2. Ensemble d'étanchéité selon la revendication 1, **caractérisé en ce qu'**est prévu, au niveau au moins d'un côté de l'au moins un joint d'étanchéité de siphon (9), un joint d'étanchéité (31) mécanique surmontant le passage (8), pourvu d'au moins un élément d'étanchéité (28) au niveau de l'élément de machine se déplaçant en périphérie et/ou au niveau de l'élément de machine (11 ; 19, 20) stationnaire et pourvu d'au moins une surface d'étanchéification (30) coopérant avec l'élément d'étanchéité (28) au niveau de l'élément de machine stationnaire et/ou au niveau de l'élément de machine (19, 20 ; 11) se déplaçant en périphérie.

3. Ensemble d'étanchéité selon la revendication 2, **caractérisé en ce que** le joint d'étanchéité (31) mécanique est prévu au niveau du côté, opposé à l'espace ou à la zone (22) stérile, de l'au moins un joint d'étanchéité de siphon (9).

4. Ensemble d'étanchéité selon la revendication 2, **caractérisé en ce que** l'au moins un joint d'étanchéité (31) mécanique est prévu au niveau du côté, tourné vers l'espace ou la zone (21) stérile, de l'au moins un joint d'étanchéité de siphon (9).

5. Ensemble d'étanchéité selon l'une quelconque des revendications 2 à 4, **caractérisé en ce que** l'au moins un joint d'étanchéité (31) mécanique entoure de manière à présenter une forme annulaire l'au moins un joint d'étanchéité de siphon (9).

6. Ensemble d'étanchéité selon l'une quelconque des revendications 2 à 4, **caractérisé en ce que** l'au moins un joint d'étanchéité (31) mécanique est entouré de manière à présenter une forme annulaire par l'au moins un joint d'étanchéité de siphon (9).

7. Ensemble d'étanchéité selon l'une quelconque des revendications 2 à 6, **caractérisé en ce que** l'au moins un élément d'étanchéité est une bague d'étanchéité (28).

8. Ensemble d'étanchéité selon l'une quelconque des revendications 2 à 7, **caractérisé en ce que** l'au moins un élément d'étanchéité présente au moins une lèvre d'étanchéité (29) coopérant avec la surface d'étanchéification (30).

9. Ensemble d'étanchéité selon l'une quelconque des revendications précédentes, **caractérisé en ce que** l'au moins un canal annulaire (24) présente au moins une admission (32) ainsi qu'au moins une sortie (33) pour le liquide de barrage.

10. Ensemble d'étanchéité selon la revendication 9, **caractérisé en ce que** l'au moins une sortie (33) est réalisée sous la forme d'un trop-plein réglant le niveau de liquide (27) du liquide de barrage.

11. Installation ou dispositif servant à traiter des bouteilles ou des contenants similaires (2), comprenant au moins un passage (8) entre un élément de machine (11) se déplaçant en périphérie et un élément de machine (19, 20) stationnaire ainsi qu'un ensemble d'étanchéité prévu au niveau du passage (8) et permettant le déplacement relatif entre les éléments de machine, **caractérisée** ou **caractérisé en ce**
**que** l'ensemble d'étanchéité est réalisé selon l'une quelconque des revendications précédentes.

12. Installation selon la revendication 11, **caractérisée en ce que** l'installation est réalisée aux fins du transvasement aseptique à froid d'un produit de remplissage liquide dans des bouteilles ou des contenants (2) similaires, et que les éléments de machine formant le passage (8) sont des parties (11, 19) d'une enceinte séparant un espace ou une zone (21) stérile d'au moins un espace ou une zone non stérile.

13. Installation selon la revendication 11 ou 12, **caractérisée en ce que** l'au moins une admission (32) de l'au moins un canal annulaire (24) du joint d'étanchéité de siphon (9) est reliée à un réservoir (34), depuis lequel du liquide de barrage peut être amené en permanence au canal annulaire (24).

14. Installation selon l'une quelconque des revendications 11 - 13, **caractérisée par** un débitmètre (44) au niveau de l'au moins une sortie (33), réalisée sous la forme d'un trop-plein, du canal annulaire (24) respectif, dans laquelle le débitmètre (44) est traversé par le liquide de barrage afin de surveiller le flux volumique de ce dernier s'écoulant depuis le canal annulaire (24).

15. Installation selon la revendication 14, **caractérisée en ce que** le débitmètre (44) sert à générer un signal de mesure, qui entraîne alors un message d'erreur et/ou une interruption de production immédiate quand le flux volumique revenant de l'au moins un canal annulaire (24) ne correspond pas au flux volumique du liquide de barrage s'écoulant en direction de l'au moins un canal annulaire (24) et/ou le flux volumique revenant présente une valeur inférieure à une valeur de seuil spécifiée.

16. Installation selon l'une quelconque des revendications 13 et 14 - 15, si dépendantes de la revendication 13, **caractérisée en ce que**
des moyens servant à régler ou réguler le flux volumique, s'écoulant en direction de l'au moins un joint d'étanchéité de siphon (9), du liquide de barrage sont prévus dans un conduit d'alimentation (41) relié à l'au moins une admission (32) de l'au moins un joint d'étanchéité de siphon (9).

17. Installation selon l'une quelconque des revendications 11 à 16,
**caractérisée**
**par** au moins une unité de capteur (40) servant à l'analyse permanente d'un liquide de barrage ramené, en particulier servant à définir la concentration d'un milieu stérilisant dans le liquide de barrage, par l'intermédiaire de laquelle (unité de capteur) le liquide de barrage ramené parvient au niveau du réservoir (4) ou au niveau d'un dispositif servant à préparer le liquide de barrage.

18. Installation selon l'une quelconque des revendications précédentes 11 à 17,
**caractérisée**
**par** plusieurs ensembles d'étanchéité prévus au niveau respectivement d'un passage entre l'élément de machine se déplaçant en périphérie et l'élément de machine (11, 19) stationnaire, pourvus respectivement d'au moins un joint d'étanchéité de siphon (9), dans laquelle tous les joints d'étanchéité de siphon (9) sont alimentés depuis un réservoir (34) commun en le liquide de barrage.

19. Installation selon la revendication 18, **caractérisée en ce que** les moyens servant à régler et/ou à réguler le flux volumique du liquide de barrage s'écoulant en toute autonomie sont prévus dans un conduit d'alimentation (41) de chaque joint d'étanchéité de siphon (9).

20. Installation selon la revendication 18 ou 19, **caractérisée en ce qu'**une pompe (39) commune est associée à tous les joints d'étanchéité de siphon (9) ou à des groupes de joints d'étanchéité de ce type.

21. Installation selon l'une quelconque des revendications 14 et 15 - 20, si dépendantes de la revendication 14, **caractérisée en ce**
**qu'**un débitmètre (44) propre est prévu au niveau de l'au moins une sortie (33) ou au niveau du retour (43), raccordé à ladite sortie (33), de chaque joint d'étanchéité de siphon.

22. Installation selon l'une quelconque des revendications 13 et 14 - 21, si dépendantes de la revendication 13, **caractérisée en ce**
**que** le réservoir (34) servant à alimenter les joints d'étanchéité de siphon (9) en liquide de barrage est dans le même temps le réservoir servant à collecter le liquide de barrage ramené.

23. Installation selon l'une quelconque des revendications 13 et 14 -22, si dépendantes de la revendication 13, **caractérisée en ce**
**que** des moyens (35, 36, 37, 38) servant à régler et à réguler une concentration spécifiée en milieu de stérilisation ou servant à compléter le milieu de stérilisation sont prévus au niveau du réservoir (34) pour le liquide de barrage.
